# EUROPÄISCHE PATENTSCHRIFT

(11) **EP 3 339 833 B1**
(45) Veröffentlichungstag und Bekanntmachung des Hinweises auf die Patenterteilung: **10.11.2021**
(21) Anmeldenummer: 16206130.3
(22) Anmeldetag: 22.12.2016
(51) Int. Cl.: G01N 15/06, G01N 27/04, G01N 15/00

(54) **SENSOR, INSBESONDERE RUSSSENSOR, VERFAHREN ZUR HERSTELLUNG EINES SENSORS, INSBESONDERE EINES RUSSSENSORS, UND VERWENDUNG**
SENSOR, IN PARTICULAR SOOT SENSOR, METHOD FOR PRODUCING A SENSOR, IN PARTICULAR A SOOT SENSOR, AND USE
CAPTEUR, EN PARTICULIER CAPTEUR DE SUIE, PROCÉDÉ DE PRODUCTION D'UN CAPTEUR, EN PARTICULIER D'UN CAPTEUR DE SUIE, ET UTILISATION

(43) Veröffentlichungstag der Anmeldung: 27.06.2018
(73) Patentinhaber: Heraeus Nexensos GmbH, 63801 Kleinostheim (DE)
(72) Erfinder: Nick, Christoph, 63571 Gelnhausen (DE); Wienand, Karlheinz, 63741 Aschaffenburg (DE); Asmus, Tim, 35469 Allendorf-Winnen (DE); Dietmann, Stefan, 63755 Alzenau (DE)
(74) Vertreter: Kilchert, Jochen

(56) Entgegenhaltungen:
- DE-A1-102015 122 668
- JP-A- 2002 357 579
- US-A1- 2005 227 373
- US-A1- 2008 047 847
- US-A1- 2011 203 348
- US-A1- 2012 085 146
- US-A1- 2012 151 992
- US-A1- 2014 070 825

## Beschreibung

Die Erfindung betrifft einen Sensor zur Detektion elektrisch leitfähiger und/oder polarisierbarer Partikel nach Anspruch 1, insbesondere einen Rußsensor, umfassend ein Substrat, eine auf dem Substrat ausgebildete Elektrodenschicht mit mindestens zwei voneinander räumlich getrennten und ineinander greifenden Elektroden, wobei auf der vom Substrat abgewandten Seite der Elektrodenschicht mindestens eine Abdeckschicht ausgebildet ist, wobei in der Abdeckschicht mehrere schlitzförmige Öffnungen ausgebildet sind, die zumindest abschnittsweise eine Oberfläche einer Elektrode, insbesondere der mindestens zwei Elektroden, freilegen, wobei die Elektroden jeweils mehrere längliche Fingerabschnitte aufweisen, wobei die Längserstreckung der schlitzförmigen Öffnungen senkrecht zur Längserstreckung der Fingerabschnitte ausgebildet ist. Des Weiteren bezieht sich die Erfindung auf ein Verfahren nach Anspruch 8 zur Herstellung eines erfindungsgemäßen Sensors, insbesondere eines Rußsensors.

Für die Messung von Rußkonzentrationen in einem Abgasstrom von Verbrennungsmotoren werden beispielsweise Sensoren mit kammähnlichen Elektrodenstrukturen verwendet. In WO 2006/111386 A1 wird eine beispielhafte Elektrodenstruktur bzw. ein beispielhafter Sensor beschrieben. Zwischen den Elektroden wird der Abfall des elektrischen Widerstandes durch die zunehmende Rußbelegung gemessen. Durch die Ausbildung eines Heizelements am oder im Rußsensor lässt sich der Sensor nach starker Rußbelegung wieder regenerieren.

Um die Empfindlichkeit des Rußsensors zu steigern, sollten die ineinander greifenden Elektroden einen möglichst geringen Abstand zueinander haben. In

WO 2014/135450 A1 wird ein derart geringer Abstand dadurch hergestellt, indem die Platin-Elektroden durch Laser-Ablation der vollflächig aufgebrachten PlatinSchicht vereinzelt werden und sich somit Elektrodenabstände von weniger als 50 µm realisieren lassen.

Aus DE 10 2015 122 668 A1 ist es bekannt, dass Sensoren aus mehreren übereinandere angeordneten Elektrodenschichten gebildet sein können. Die Oberflächen von dabei ausgebildeten Elektroden können mittels Öffnungen freigelegt sein.

In US 2012/0085146 A1 wird hingegen ein Rußsensor mit einer Elektrodenschicht offenbart, wobei eine zusätzlich ausgebildete Abdeckschicht von der Elektrodenschicht beabstandet ausgebildet ist. In der Abdeckschicht sind kreisrunde Löcher ausgebildet, die unterschiedliche Durchmesser aufweisen können. Die Abdeckschicht bildet eine siebförmige Abdeckung. Eine Erhöhung der Sensitivität des Sensors wird hierdurch nicht erzielt.

Aus US 2012/0151992 A1 ist ein derartiges Sensor-Konzept bekannt, wonach ein Partikelstrom in einem Kanal über Elektroden geführt wird. Hierzu sind Schlitze quer über die ganze Breite des Sensors aufgebaut.

US 2005/0227373 A1 betrifft hingegen einen Biochip, der auf einer kapazitiven Sensorvorrichtung beruht. Diese kapazitive Sensorvorrichtung weist ineinandergreifende Elektroden mit parallelen Fingern auf.

In der gattungsbildenden US 2011/0203348 A1 wird ein Rußsensor mit ineinandergreifenden Elektrodenfingern offenbart. Des Weiteren ist auf den Elektrodenfingern eine Abdeckschicht ausgebildet. In der Abdeckschicht sind mehrere schlitzförmige Öffnungen ausgebildet, wobei diese Öffnungen derart positioniert sind, dass seitliche Oberflächenabschnitte der Elektrodenfinger freiliegen.

Aufgrund der abnehmenden Rußkonzentration im Abgasstrom von Verbrennungsmotoren ist es wünschenswert, die Empfindlichkeit des Sensors weiter zu steigern, ohne dabei die Sensorgröße oder das bisherige Prinzip der Sensorherstellung grundlegend zu ändern.

Der Erfindung liegt die Aufgabe zu Grunde, einen weiterentwickelten Sensor, insbesondere einen Rußsensor, anzugeben, der eine erhöhte Empfindlichkeit aufweist. Des Weiteren ist es Aufgabe der vorliegenden Erfindung ein weiterentwickeltes Verfahren zum Herstellen eines erfindungsgemäßen Sensors anzugeben.

Erfindungsgemäß wird diese Aufgabe im Hinblick auf den Sensor durch die Merkmale des Anspruches 1 gelöst. Im Hinblick auf das Verfahren zur Herstellung eines Sensors, insbesondere eines Rußsensors, wird die Aufgabe durch die Merkmale des Anspruches 8 gelöst.

Die Erfindung beruht auf dem Gedanken, einen Sensor zur Detektion elektrisch leitfähiger und/oder polarisierbarer Partikel, insbesondere einen Rußsensor, anzugeben, wobei der Sensor ein Substrat, eine auf dem Substrat ausgebildete Elektrodenschicht mit mindestens zwei voneinander räumlich getrennten und ineinander greifenden Elektroden umfasst, wobei auf der vom Substrat abgewandten Seite der Elektrodenschicht mindestens eine Abdeckschicht ausgebildet ist.

Erfindungsgemäß sind in der Abdeckschicht mehrere schlitzförmige Öffnungen ausgebildet, die zumindest abschnittsweise eine Oberfläche einer Elektrode, insbesondere der mindestens zwei Elektroden, freilegen. Es zeigt sich, dass die Empfindlichkeit des Sensors gesteigert wird, wenn die Abdeckschicht, die große Teile des Sensors, insbesondere große Teile der Elektrodenschicht, bedeckt, in geeigneter Weise strukturiert, insbesondere laserstrukturiert ist.

Die Elektroden weisen jeweils mehrere längliche Fingerabschnitte auf, wobei die Längserstreckung der schlitzförmigen Öffnungen erfindungsgemäß senkrecht zur Längserstreckung der Fingerabschnitte ausgebildet ist.

Das Substrat ist vorzugsweise aus Aluminiumoxid (Al₂O₃) und/oder Zirkoniumoxid (ZrO₂) und/oder aus Zirkoniumoxid (ZrO₂) mit Isolierung und/oder anderen Oxidkeramiken, hergestellt. In einer bevorzugten Ausführungsform der Erfindung weist das Substrat eine Dicke von 0,5 - 1,0 mm auf.

Auf einer Seite des Substrates ist eine Elektrodenschicht ausgebildet. Diese Elektrodenschicht umfasst mindestens zwei Elektroden, die räumlich voneinander getrennt sind und ineinandergreifen.

Bei derartigen Elektroden kann es sich beispielsweise um Kammelektroden und/oder interdigitierende Elektroden handeln. Die mindestens zwei Elektroden berühren sich nicht. Vielmehr sind Elektrodenabschnitte einer ersten Elektrode in Ausnehmungen von Elektrodenabschnitten der zweiten Elektrode angeordnet jedoch ohne sich zu berühren. Vorzugsweise besteht mindestens eine der Elektroden aus Platin. Die Dicke der Elektrodenschicht beträgt vorzugsweise 0,5 - 20,0 µm.

Die Abdeckschicht kann beispielsweise aus Aluminiumoxid (Al₂O₃) und/oder Siliziumdioxid (SiO₂) und/oder Glas gebildet sein. Die Abdeckschicht weist vorzugsweise eine Dicke von 0,5 µm - 20,0 µm auf.

In der Abdeckschicht sind erfindungsgemäß mehrere schlitzförmige Öffnungen ausgebildet. Als schlitzförmige Öffnungen sind derartige Öffnungen zu verstehen, deren Länge größer ist als die Breite.

Es ist möglich, dass die schlitzförmigen Öffnungen parallel zueinander ausgebildet sind. Insbesondere ist es möglich, dass die schlitzförmigen Öffnungen ein gleichmäßiges Muster bilden. Das heißt, dass mehrere Reihen von schlitzförmigen Öffnungen nebeneinander angeordnet sind, wobei die Abstände der Reihen vorzugsweise jeweils den gleichen Betrag aufweisen.

Die Schlitzbreite der Öffnungen beträgt vorzugsweise zwischen 1,0 µm - 50,0 µm.

Die Elektroden weisen erfindungsgemäß mehrere längliche Fingerabschnitte auf. Die Fingerabschnitte der mindestens zwei Elektroden sind dabei vorzugsweise parallel zueinander angeordnet.

Die Längserstreckung der schlitzförmigen Öffnungen ist senkrecht zur Längserstreckung der Fingerabschnitte ausgebildet, wobei die Längserstreckungen aller schlitzförmigen Öffnungen vorzugsweise parallel zueinander ausgebildet sind.

Erfindungsgemäß sind die schlitzförmigen Öffnungen derart in die Abdeckschicht eingebracht, dass die Längserstreckungen der schlitzförmigen Öffnungen senkrecht zu den Fingerabschnitten der Elektroden ausgebildet sind. Mit anderen Worten sind die Längserstreckungen der schlitzförmigen Öffnungen senkrecht zur Längserstreckung der Fingerabschnitte ausgebildet.

Zwischen den schlitzförmigen Öffnungen verbleiben vorzugsweise Abschnitte der Abdeckschicht.

Bei der Verwendung eines erfindungsgemäßen Sensors werden zwischen den mindestens zwei Elektroden Filamente, insbesondere Ruß-Filamente, d.h. Aneinanderreihungen von Partikeln bzw. Rußpartikeln, gebildet. Derartige Filamente bzw. Ruß-Filamente wachsen von einer negativ gepolten Elektrode zu einer positiv gepolten Elektrode vorzugsweise in Richtung der Gas-Strömungsrichtung. Vorzugsweise ist ein Sensor derart in einem Gasstrom angeordnet, dass die Gas-Strömungsrichtung senkrecht zu der Längserstreckung der Fingerabschnitte verläuft. Die zwischen den schlitzförmigen Öffnungen ausgebildeten Abschnitte bzw. verbleibenden Abschnitte der Abdeckschicht stabilisieren die beschriebenen Ruß-Filamente mechanisch. Dies führt zu einer bevorzugten Filamentbildung und somit zu einer erhöhten Sensitivität.

Die Filamente, insbesondere die Ruß-Filamente, können als Ketten aneinanderhängender Partikel, insbesondere als Ketten aneinanderhängender Rußpartikel, bezeichnet werden.

Die Bildung von Filamenten, insbesondere Ruß-Filamenten zwischen benachbarten Elektroden, insbesondere zwischen benachbarten Kammelektroden, reduziert den elektrischen Widerstand, sofern das Filament beide Elektroden kontaktiert. Die Empfindlichkeit des Sensors wird durch die Bildung der (Ruß-)Filamente bestimmt.

Bei der erfindungsgemäßen Ausbildung der Längserstreckungen der schlitzförmigen Öffnungen senkrecht zur Längserstreckung der Fingerabschnitte können Ruß-Filamente entlang der verbleibenden Abschnitte der Abdeckschicht auf direktem Weg zwischen den mindestens zwei Elektroden gebildet werden bzw. wachsen.

Die schlitzförmigen Öffnungen können zumindest abschnittsweise die Seitenflächen der Fingerabschnitte freilegen und/oder zumindest abschnittsweise die Oberseite der Fingerabschnitte freilegen. Die freiliegende bzw. freigelegte Oberfläche mindestens einer Elektrode ist mit anderen Worten ein Abschnitt der Oberseite und/oder der Seitenfläche der Elektrode.

Als Seitenflächen der Fingerabschnitte sind die (im Wesentlichen) senkrecht zum Substrat bzw. senkrecht zur Abdeckschicht ausgebildeten Flächen der Elektroden zu verstehen. Vorzugsweise sind die Seitenflächen (im Wesentlichen) parallel zueinander ausgebildet. Als Oberseite der Fingerabschnitte sind die Seiten zu verstehen, die in Richtung der Abdeckschicht weisen. Zumindest in einem Zwischenprodukt des Sensors bzw. in einem Zwischenstadium der Herstellung des Sensors sind die Oberseiten der Fingerabschnitte, vorzugsweise vollständig, mit der Abdeckschicht bedeckt.

In einer weiteren Ausführungsform der Erfindung können die schlitzförmigen Öffnungen zumindest abschnittsweise die Kantenbereiche der Oberseite der Fingerabschnitte freilegen. Als Kantenbereiche der Oberseite sind die Bereiche der Oberseite zu verstehen, die an die Seitenflächen der Fingerabschnitte anschließen.

In einer weiteren Ausführungsform der Erfindung können die Oberflächen der freigelegten Elektrodenabschnitte zumindest abschnittsweise mit Glasfasern und/oder mit Partikeln, insbesondere mit Aluminiumoxid-Partikeln (Al₂O₃) und/oder mit Siliziumdioxid-Partikeln (SiOz), beschichtet sein.

Ein weiterer Aspekt der Erfindung betrifft ein Verfahren zur Herstellung eines erfindungsgemäßen Sensors, insbesondere eines erfindungsgemäßen Rußsensors. Das erfindungsgemäße Verfahren ist durch folgende Verfahrensschritte gekennzeichnet:
a) Bereitstellen eines Substrats,
b) Ausbildung einer Elektrodenschicht mit mindestens zwei voneinander räumlich getrennten und ineinander greifenden Elektroden auf dem Substrat,
c) Aufbringen einer Abdeckschicht auf die Elektrodenschicht,
d) Einbringen von schlitzförmigen Öffnungen in die Abdeckschicht mittels Laser, derart, dass die Oberfläche mindestens einer Elektrode zumindest abschnittsweise freigelegt ist.

Im Schritt d), d.h. beim Einbringen von schlitzförmigen Öffnungen wird insbesondere ein Ultra-Kurzpuls-Laser verwendet. Bei dem Ultra-Kurzpuls-Laser handelt es sich insbesondere um einen Pikosekunden- oder Femtosekunden-Laser. Mit Hilfe eines derartigen Ultra-Kurzpuls-Lasers ist es möglich, schlitzförmige Öffnungen mit Linienbreiten von 1,0 bis 50,0 µm in die Abdeckschicht einzubringen.

Beim Ausbilden einer Elektrodenschicht ist es zunächst möglich, dass im Schritt b) auf das Substrat zunächst eine flächige Elektrodenschicht aufgebracht wird und die Elektrodenschicht anschließend strukturiert wird. Eine flächige Elektrodenschicht kann beispielsweise mittels einer Depositionsmethode, wie z.B. Siebdruck und/oder Sputtern und/oder thermisches Aufdampfen, aufgebracht werden. Das anschließende Strukturieren der Elektrodenschicht kann beispielsweise mittels Laser, insbesondere mittels Ultra-Kurzpuls-Laser durchgeführt werden. Insbesondere zur Erzeugung kleiner Abstände zwischen den einzelnen Elektroden, insbesondere zwischen den einzelnen Fingerabschnitten der Elektroden, ist es vorteilhaft, einen Ultra-Kurzpuls-Laser zu verwenden.

Alternativ ist es möglich, die Elektrodenschicht mittels Siebdruck herzustellen. Insbesondere Metallpasten können zunächst in einem Siebdruck aufgebracht werden, um eine spätere Elektrodenstruktur zu bilden.

Die, insbesondere keramische, Abdeckschicht kann durch Siebdruck und/oder thermisches Aufdampfen und/oder durch ADM-Verfahren (Aerosol Deposition Method) aufgebracht werden. Nach dem Aufbringen der Abdeckschicht erfolgt erfindungsgemäß das Einbringen von schlitzförmigen Öffnungen mittels Ultra-Kurzpuls-Laser.

Besonders bevorzugt handelt es sich bei der Abdeckschicht mit mehreren schlitzförmigen Öffnungen um eine laserstrukturierte Abdeckschicht.

Ein weiterer nebengeordneter Aspekt der Erfindung betrifft die Verwendung eines erfindungsgemäßen Sensors zur Detektion elektrisch leitfähiger und/oder polarisierbarer Partikel, insbesondere zur Detektion von Rußpartikeln.

Die Erfindung betrifft insbesondere die Verwendung eines erfindungsgemäßen Sensors in einem Abgassystem, insbesondere in einem Abgasstrang, eines Verbrennungsmotors.

Der erfindungsgemäße Sensor ist vorzugsweise derart im Abgasrohr angeordnet, dass die Gas-Strömungsrichtung senkrecht zu den Längserstreckungen der Fingerabschnitte der Elektroden ausgerichtet ist. Die zuvor beschriebenen (Ruß-)Filamente werden insbesondere von einer negativ gepolten Elektrode in Richtung der positiv gepolten Elektrode in Gas-Strömungsrichtung gebildet. Die Abschnitte der Abdeckschicht, die zwischen den schlitzförmigen Öffnungen ausgebildet sind stabilisieren die (Ruß-)Filamente mechanisch. Aufgrund dessen tritt die bevorzugte (Ruß-)Filamentbildung auf. Dies bedingt eine erhöhte Sensitivität des erfindungsgemäßen Sensors.

Der Sensor gemäß erfindungsgemäßer Anwendung bzw. Anordnung ist im Abgasrohr derart ausgebildet, dass die Längserstreckungen der schlitzförmigen Öffnungen senkrecht zur Längserstreckung der Fingerabschnitte ausgebildet sind. Bei einer derartigen Ausbildung der schlitzförmigen Öffnungen können die (Ruß-)Filamente entlang der verbleibenden Abdeckschicht-Abschnitte auf direktem Weg zwischen den mindestens zwei Elektroden wachsen. Die verbleibenden Abdeckschicht-Abschnitte können auch als Aluminiumoxid (Al₂O₃)-Brücken bezeichnet werden, sofern die Abdeckschicht aus Aluminiumoxid besteht.

Die beschriebenen (Ruß-)Filamente bilden sich bevorzugt entlang der Kanten und/oder kammartiger Brücken der freigelegten Abdeckschicht aus. Des Weiteren bilden sich die (Ruß-) Filamente im "Windschatten" bzw. im Strömungs-Totbereich lokaler Topologiespitzen der Abdeckschicht aus.

Nachfolgend wird die Erfindung anhand von Ausführungsbeispielen unter Bezug auf die beigefügten schematischen Zeichnungen näher erläutert.

In diesen zeigen:
Fig. 1a - 5b verschiedene Stufen und Schritte des Verfahrens zur Herstellung eines erfindungsgemäßen Sensors; und
Fig. 6 einen erfindungsgemäßen Sensor im Verwendungszustand.

Im Folgenden werden für gleiche und gleichwirkende Teile gleiche Bezugsziffern verwendet.

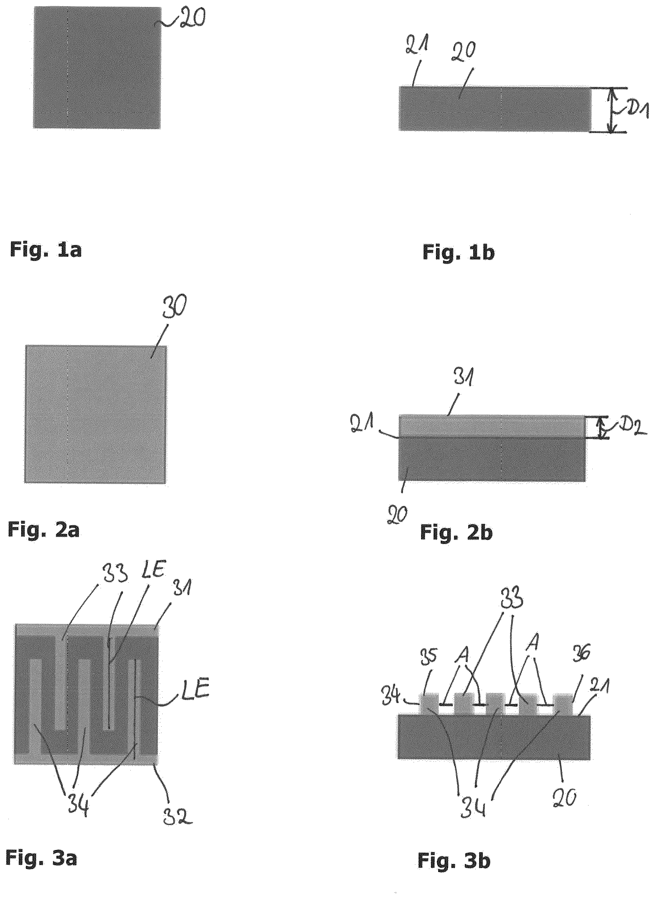

In den Fig. 1a - 5b werden in den unter den Buchstaben a aufgeführten Darstellungen der erfindungsgemäße Sensor im jeweiligen Verfahrensschritt in einer Draufsicht dargestellt. Unter den Figuren b werden Querschnitte durch den Sensor gemäß dem jeweiligen Verfahrensstand bzw. Verfahrensschritt dargestellt. Dabei ist zu beachten, dass die Darstellungen der Querschnitte nicht maßstäblich sind, sondern dass die aufgebrachten Schichten in Richtung der Senkrechten zur Oberfläche des Substrats stark vergrößert gezeichnet sind.

In Fig. 1a ist zunächst das Substrat 20 dargestellt. Das Substrat 20 kann aus Aluminiumoxid (Al₂O₃) und/oder Zirkoniumoxid (ZrO₂) und/oder aus Zirkoniumoxid (ZrO₂) mit Isolierung hergestellt sein. Die in Fig. 1b erkennbare Dicke D1 kann 0,5 - 1,0 mm betragen.

Im in Fig. 2a und 2b dargestellten Verfahrensschritt wird zunächst eine flächige Elektrodenschicht 30 auf die Seite 21 des Substrates 20 aufgebracht. Vorzugsweise handelt es sich bei der Elektrodenschicht 30 um eine Platinschicht. Diese Schicht kann im Rahmen eines Siebdruckverfahrens und/oder aufgrund eines Sputter-Verfahrens und/oder mittels eines chemischen Aufdampfverfahrens aufgebracht werden. Die Dicke D2 der Elektrodenschicht 30 kann 0,5 - 20,0 µm aufweisen.

In den Fig. 3a und 3b wird die Strukturierung der Elektrodenschicht 30 dargestellt. Es werden demnach mittels Laser-Ablation zwei Elektroden, nämlich eine erste Elektrode 31 und eine zweite Elektrode 32 erzeugt. Durch Abtrag einzelner Abschnitte der vormals flächigen Elektrodenschicht 30 werden die beiden Elektroden 31 und 32 gebildet.

Die erste Elektrode 31 weist zwei Fingerabschnitte 33 auf. Die zweite Elektrode 32 weist drei Fingerabschnitt 34 auf. Die beiden Elektroden 31 und 32 greifen ineinander. Dabei berühren sich die Fingerabschnitte 33 und 34 der Elektroden 31 und 32 nicht. Die Fingerabschnitte 33 und 34 der beiden Elektroden 31 und 32 sind im Wesentlichen parallel zueinander ausgebildet. Zwischen den Fingerabschnitte 33 und 34 sind vorzugsweise Abstände von 1,0 - 50,0 µm ausgebildet. Insbesondere sind die Abstände A zwischen den Fingerabschnitten 33 und 34 gleich groß. Die Elektroden 31 und 32 können auch als interdigitierende Elektroden bezeichnet werden.

Des Weiteren sind die Längserstreckungen LE der Fingerabschnitte 33 und 34 zu erkennen, die parallel zueinander ausgebildet sind.

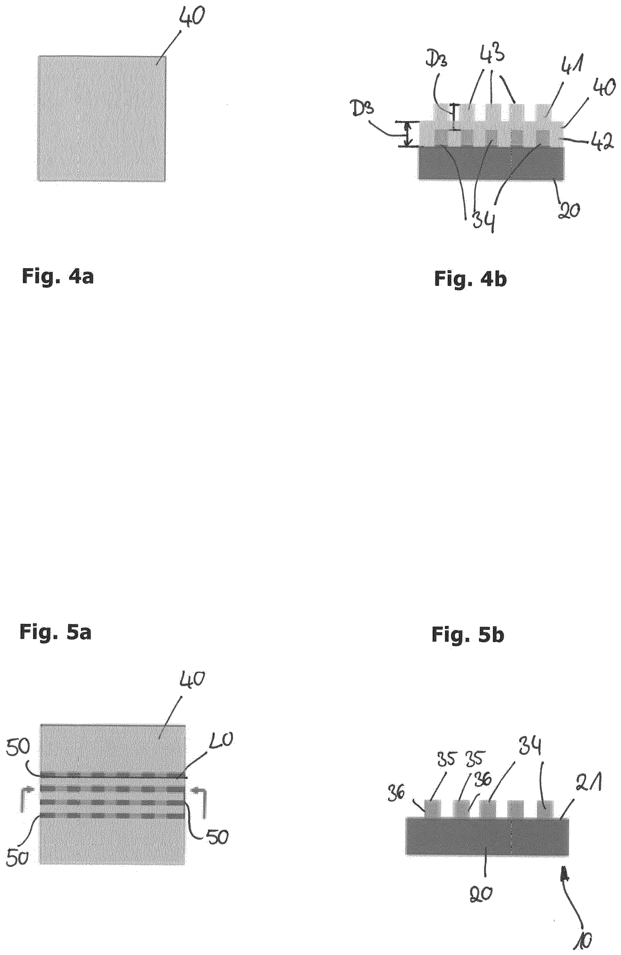

Wie in Fig. 4a und 4b dargestellt wird, wird anschließend auf die Elektrodenschicht 30 eine Abdeckschicht 40 aufgebracht. Die Abdeckschicht 40 kann aus Aluminiumoxid (Al₂O₃) und/oder Siliziumdioxid (SiO₂) und/oder Glas bestehen. Die Abdeckschicht 40 wird beispielsweise mittels eines Siebdruckverfahrens oder mittels eines thermischen Aufdampfens oder im Rahmen eines ADM-Verfahrens (Aerosol Deposition Method) aufgebracht.

Die Abdeckschicht 40 wird derart auf der Elektrodenschicht 30 aufgebracht, dass sowohl die Oberseiten 35 der Elektroden 31 und 32 als auch die Seitenfläche 36 der Elektroden 31 und 32 (siehe hierzu Fig. 3a und 3b) mit der Abdeckschicht 40 beschichtet sind. Die Abdeckschicht 40 kann dabei aus mehreren übereinander angeordneten Abschnitten bestehen. Nämlich aus einem ersten Abschnitt 41 und einem zweiten Abschnitt 42. Die beiden Abschnitte 41 und 42 entstehen dadurch, dass eine gleichmäßige Dicke D3 der Abdeckschicht 40 aufgebracht wird. Demnach ist die Dicke D3 des Abschnittes 42, der auf der Seite 21 des Substrates 20 aufgebracht ist gleich der Dicke D3 des ersten Abschnitts 41, der auf der Oberseite 35 der Elektroden 31 und 32 aufgebracht ist. Die Dicke D3 der Abdeckschicht 40 beträgt vorzugsweise 0,5 - 20,0 µm. Aufgrund der durchgehend gleichen Schichtdicke D3 entstehen Vorsprünge 43 der Abdeckschicht 40.

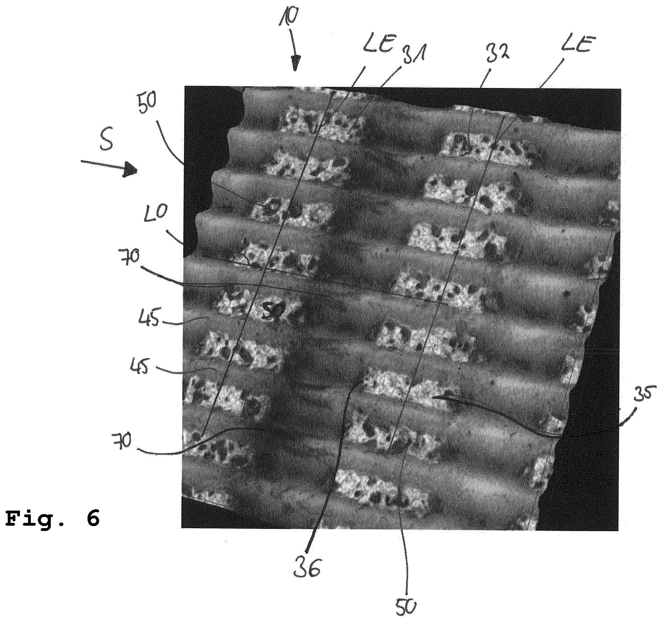

In den Fig. 5a und 5b wird eine Ausführungsform der Erfindung dargestellt. In diesem Fall verlaufen die Längserstreckungen LO senkrecht zu den Längserstreckungen LE der Elektroden 31 und 32. Vorzugsweise werden die schlitzförmigen Öffnungen 50 durchgängig ausgebildet. In Fig. 6 wird ein Querschnitt entlang der angedeuteten Pfeile in Fig. 6a dargestellt. Die schlitzförmigen Öffnungen 50 legen somit nicht nur die Oberseiten 36 der Elektroden 31 und 32 frei, sondern auch die Seite 21 des Substrates 20. Demnach sind in Fig. 6b nicht nur die Oberseiten 35 der Elektroden 31 und 32, sondern auch die Seitenflächen 36 der Elektroden 31 und 32 freigelegt.

Ein erfindungsgemäßer Sensor 10 wird auch in Fig. 6 dargestellt. Es ist die Gas-Strömungsrichtung S zu erkennen. Der Sensor 10 ist erfindungsgemäß derart im Gasstrom bzw. in Relation zur Gas-Strömungsrichtung S angeordnet, dass die Längserstreckungen LE der Elektroden 31 und 32 senkrecht zur Strömungsrichtung S ausgerichtet sind. Die erste Elektrode 31 ist im dargestellten Beispiel negativ gepolt, wohingegen die zweite Elektrode 32 positiv gepolt ist.

Ebenfalls zu erkennen sind die schlitzförmigen Öffnungen 50, deren Längserstreckungen LO senkrecht zur Längserstreckung LE ausgebildet sind. Aufgrund der schlitzförmigen Öffnungen 50 werden die Oberseiten 35 der Elektroden 31 und 32 sowie die Seitenflächen 36 der Elektroden 31 und 32 freigelegt. Die schlitzförmigen Öffnungen 50 sind im dargestellten Beispiel durchgängig ausgebildet. Zwischen den schlitzförmigen Öffnungen 50 sind Abschnitte 45 der Abdeckschicht 40 ausgebildet. Diese Abschnitte 45 bilden kammartige Erhebungen. Entlang dieser bilden sich die Filamente 70 auf dem Sensor 10 besonders bevorzugt aus. Die stehen bleibenden kammartigen Erhebungen der Abdeckschicht 45 können den sich bildenden Filamenten 70 als mechanische Stabilisierung dienen.

Als Filamente 70 sind Ketten aneinanderhängender Partikel, insbesondere Ketten aneinanderhängender Rußpartikel, zu verstehen. Die erfindungsgemäß ausgebildete laserstrukturierte Abdeckschicht 40 fördert die Filamentbildung 70 der Rußpartikel, die sich zwischen den Elektroden 31 und 32 bilden. Die Elektroden 31 und 32 können so auf geradem Weg mittels der Abschnitte 45 miteinander verbrückt werden. Die Empfindlichkeit des erfindungsgemäßen Sensors ist im Vergleich zu bekannten Sensoren erheblich gesteigert.

### Bezugszeichenliste

- 10: Sensor
- 20: Substrat
- 21: Seite
- 30: Elektrodenschicht
- 31: Erste Elektrode
- 32: Zweite Elektrode
- 33: Fingerabschnitt erste Elektrode
- 34: Fingerabschnitt zweite Elektrode
- 35: Oberseite Elektrode
- 36: Seitenfläche Elektrode

- 40: Abdeckschicht
- 41: Abschnitt Abdeckschicht
- 42: Abschnitt Abdeckschicht
- 43: Vorsprung
- 45: Abschnitt Abdeckschicht
- 50: Schlitzförmige Öffnung

- 70: Filament
- A: Abstand Fingerabschnitt
- D1: Dicke Substrat
- D2: Dicke Elektrode
- D3: Dicke Abdeckschicht
- LE: Längserstreckung Elektrode
- LO: Längserstreckung Öffnung
- S: Strömungsrichtung des Gases

## Patentansprüche

1. Sensor (10) zur Detektion elektrisch leitfähiger und/oder polarisierbarer Partikel, insbesondere Rußsensor, umfassend ein Substrat (20), eine auf dem Substrat (20) ausgebildete Elektrodenschicht (30) mit mindestens zwei voneinander räumlich getrennten und ineinander greifenden Elektroden (31, 32), wobei auf der vom Substrat (20) abgewandten Seite (35) der Elektrodenschicht (30) mindestens eine Abdeckschicht (40) ausgebildet ist,
wobei in der Abdeckschicht (40) mehrere schlitzförmige Öffnungen (50) ausgebildet sind, die zumindest abschnittsweise eine Oberfläche (35, 36) einer Elektrode (31, 32), insbesondere der mindestens zwei Elektroden (31, 32), freilegen, wobei die Elektroden (31, 32) jeweils mehrere längliche Fingerabschnitte (33, 34) aufweisen,
**dadurch gekennzeichnet, dass**
die Längserstreckung (LO) der schlitzförmigen Öffnungen (50) senkrecht zur Längserstreckung (LE) der Fingerabschnitte (33, 34) ausgebildet ist.

2. Sensor (10) nach Anspruch 1,
**dadurch gekennzeichnet, dass**
die Schlitzbreite der schlitzförmigen Öffnungen (50) vorzugsweise zwischen 1,0 µm und 50,0 µm beträgt.

3. Sensor (10) nach Anspruch 1 oder 2,
**dadurch gekennzeichnet, dass**
die Längserstreckung (LO) aller schlitzförmigen Öffnungen (50) parallel zueinander ausgebildet sind.

4. Sensor (10) nach einem der Ansprüche 1 bis 3,
**dadurch gekennzeichnet, dass**
die schlitzförmigen Öffnungen (50) zumindest abschnittsweise die Seitenflächen (36) der
Fingerabschnitte (33, 34) freilegen und/oder zumindest abschnittsweise die Oberseite (35) der Fingerabschnitte (33, 34) freilegen.

5. Sensor (10) nach Anspruch 4,
**dadurch gekennzeichnet, dass**
die schlitzförmigen Öffnungen (50) zumindest abschnittsweise die Kantenbereiche (39) der
Oberseite (35) der Fingerabschnitte (33, 34) freilegen, wobei die Kantenbereiche (39) die Bereiche der Oberseite (35) sind, die an die Seitenflächen (36) der Fingerabschnitte (33, 34) anschließen.

6. Sensor (10) nach einem der vorangegangenen Ansprüche,
**dadurch gekennzeichnet, dass**
die Oberflächen (35, 36) der freigelegten Elektrodenabschnitte zumindest abschnittsweise mit Glasfasern und/oder mit Partikeln, insbesondere mit Al₂O₃-Partikeln und/oder SiO₂-Partikel, beschichtet sind.

7. Sensor (10) nach einem der vorangegangenen Ansprüche,
**dadurch gekennzeichnet, dass**
zumindestens eine Elektrode (31, 32) aus Platin gebildet ist.

8. Verfahren zur Herstellung eines Sensor (10) nach einem der Ansprüche 1 bis 7, umfassend die folgenden Verfahrensschritte:
a) Bereitstellen eines Substrats (20),
b) Ausbilden einer Elektrodenschicht (30) mit mindestens zwei voneinander räumlich getrennten und ineinander greifenden Elektroden (31, 32) auf dem Substrat (20),
c) Aufbringen einer Abdeckschicht (40) auf die Elektrodenschicht (30),
d) Einbringen von schlitzförmigen Öffnungen (50) in die Abdeckschicht (40) mittels Laser, derart, dass die Oberfläche (35, 36) mindestens einer Elektrode (31, 32) zumindest abschnittsweise freigelegt wird.

9. Verfahren nach Anspruch 8,
**dadurch gekennzeichnet, dass**
im Schritt d) ein Ultra-Kurzpuls-Laser verwendet wird.

10. Verfahren nach Anspruch 8 oder 9,
**dadurch gekennzeichnet, dass**
im Schritt b) auf das Substrat (20) zunächst eine flächige Elektrodenschicht (30) aufgebracht wird und die Elektrodenschicht (30) anschließend strukturiert wird.

11. Verfahren nach Anspruch 10,
**dadurch gekennzeichnet, dass**
die Strukturierung der Elektrodenschicht (30) mittels Laser, insbesondere mittels Ultra-Kurzpuls-Laser, durchgeführt wird.

12. Verfahren nach Anspruch 8 oder 9,
**dadurch gekennzeichnet, dass**
im Schritt b) eine strukturierte Elektrodenschicht (30) mittels Siebdruck hergestellt wird.

13. Verfahren nach einem der Ansprüche 8 bis 12,
**dadurch gekennzeichnet, dass**
im Schritt c) die Abdeckschicht (40) durch Siebdruck oder durch thermisches Aufdampfen oder durch ADM-Verfahren (Aerosol Deposition Method) aufgebracht wird.

14. Verwendung eines Sensors (10) nach einem der Ansprüche 1 bis 7 zur Detektion elektrisch leitfähiger und/oder polarisierbarer Partikel, insbesondere zur Detektion von Rußpartikeln.

## Claims

1. Sensor (10) for detecting electrically conductive and/or polarizable particles, in particular a soot sensor, comprising: a substrate (20); an electrode layer (30) formed on the substrate (20) and having at least two spatially separate and interdigitated electrodes (31, 32), wherein at least one cover layer (40) is formed on the side (35) of the electrode layer (30) facing away from the substrate (20),
wherein multiple slit-shaped openings (50) are formed in the cover layer (40), said openings at least in some sections exposing a surface (35, 36) of an electrode (31, 32), in particular of the at least two electrodes (31, 32), wherein the electrodes (31, 32) each have multiple elongate finger sections (33, 34),
**characterized in that**
the longitudinal extent (LO) of the slit-shaped openings (50) is formed perpendicular to the longitudinal extent (LE) of the finger sections (33, 34).

2. Sensor (10) according to Claim 1,
**characterized in that**
the slit width of the slit-shaped openings (50) is preferably between 1.0 µm and 50.0 µm.

3. Sensor (10) according to Claims 1 or 2,
**characterized in that**
the longitudinal extent (LO) of all slit-shaped openings (50) are formed parallel to one another.

4. Sensor (10) according to any one of Claims 1 to 3,
**characterized in that**
the slit-shaped openings (50) expose the side surfaces (36) of the finger sections (33, 34) at least in some sections, and/or expose the upper side (35) of the finger sections (33, 34) at least in some sections.

5. Sensor (10) according to Claim 4,
**characterized in that**
slit-shaped openings (50) expose the edge regions (39) of the upper side (35) of the finger sections (33, 34), at least in some sections, wherein the edge regions (39) are the regions of the upper side (35) which adjoin the side surfaces (36) of the finger sections (33, 34).

6. Sensor (10) according to any one of the preceding claims,
**characterized in that**
the surfaces (35, 36) of the exposed electrode sections are, at least in some sections, coated with glass fibers and/or with particles, in particular with Al₂O₃ particles and/or SiO₂ particles.

7. Sensor (10) according to any one of the preceding claims,
**characterized in that**
at least one electrode (31, 32) is formed from platinum.

8. Method for producing a sensor (10) according to any one of Claims 1 to 7, comprising the following method steps:
a) providing a substrate (20),
b) forming an electrode layer (30) having at least two spatially separate and interdigitated electrodes (31, 32) on the substrate (20),
c) applying a cover layer (40) to the electrode layer (30),
d) introducing slit-shaped openings (50) into the cover layer (40) by laser in such a way that the surface (35, 36) of at least one electrode (31, 32) is exposed at least in some sections.

9. Method according to Claim 8,
**characterized in that**
an ultra-short-pulse laser is used in step d).

10. Method according to Claims 8 or 9,
**characterized in that**
in step b), a flat electrode layer (30) is first applied to the substrate (20), and the electrode layer (30) is subsequently structured.

11. Method according to Claim 10,
**characterized in that**
the structuring of the electrode layer (30) is effected by laser, in particular by means of an ultra-short-pulse laser.

12. Method according to Claims 8 or 9,
**characterized in that**
in step b), a structured electrode layer (30) is produced by screen printing.

13. Method according to any one of Claims 8 to 12,
**characterized in that**
in step c), the cover layer (40) is applied by screen printing or by thermal vapor deposition or by aerosol deposition method (ADM).

14. Use of a sensor (10) according to any one of Claims 1 to 7 for detecting electrically conductive and/or polarizable particles, in particular for detecting soot particles.

## Revendications

1. Capteur (10) destiné à la détection de particules électroconductrices et/ou polarisables, en particulier capteur de suie, comprenant un substrat (20), une couche d'électrode (30) formée sur le substrat (20) comportant au moins deux électrodes (31, 32) séparées spatialement l'une de l'autre et en prise l'une dans l'autre, dans lequel, sur le côté (35) de la couche d'électrode (30) opposé au substrat (20), au moins une couche de recouvrement (40) est formée,
dans lequel plusieurs ouvertures (50) en forme de fentes sont formées dans la couche de recouvrement (40), lesquelles exposent, au moins par sections, une surface (35, 36) d'une électrode (31, 32), en particulier des au moins deux électrodes (31, 32), dans lequel les électrodes (31, 32) comportent respectivement plusieurs sections de doigt (33, 34) oblongues,
**caractérisé en ce que**
l'étendue longitudinale (LO) des ouvertures (50) en forme de fente est formée perpendiculaire à l'étendue longitudinale (LE) des sections de doigt (33, 34).

2. Capteur (10) selon la revendication 1,
**caractérisé en ce que**
la largeur de fente des ouvertures (50) en forme de fente est de préférence comprise entre 1,0 µm et 50,0 µm.

3. Capteur (10) selon la revendication 1 ou 2,
**caractérisé en ce que**
les étendues longitudinales (LO) de toutes les ouvertures (50) en forme de fente sont formées parallèles les unes aux autres.

4. Capteur (10) selon l'une quelconque des revendications 1 à 3,
**caractérisé en ce que**
les ouvertures (50) en forme de fente exposent, au moins par sections, les surfaces latérales (36) des sections de doigt (33, 34) et/ou exposent, au moins par sections, le côté supérieur (35) des sections de doigt (33, 34).

5. Capteur (10) selon la revendication 4,
**caractérisé en ce que**
les ouvertures (50) en forme de fente exposent, au moins par sections, les zones de bord (39) du côté supérieur (35) des sections de doigt (33, 34), dans lequel les zones de bord (39) sont les zones du côté supérieur (35), lesquelles se relient aux surfaces latérales (36) des sections de doigt (33, 34).

6. Capteur (10) selon l'une quelconque des revendications précédentes,
**caractérisé en ce que**
les surfaces (35, 36) des sections d'électrode exposées sont revêtues, au moins par sections, de fibres de verre et/ou de particules, en particulier de particules de Al₂O₃ et/ou de particules de SiO₂.

7. Capteur (10) selon l'une quelconque des revendications précédentes,
**caractérisé en ce que**
au moins une électrode (31, 32) est constituée de platine.

8. Procédé de fabrication d'un capteur (10) selon l'une quelconque des revendications 1 à 7, comprenant les étapes suivantes :
a) la fourniture d'un substrat (20),
b) la formation d'une couche d'électrode (30) comportant au moins deux électrodes (31, 32) séparées spatialement l'une de l'autre et en prise l'une dans l'autre sur le substrat (20),
c) l'application d'une couche de recouvrement (40) sur la couche d'électrode (30),
d) la réalisation des ouvertures (50) en forme de fente dans la couche de recouvrement (40) au moyen du laser de telle sorte que la surface (35, 36) de l'au moins une électrode (31, 32) est exposée au moins par sections.

9. Procédé selon la revendication 8,
**caractérisé en ce que**
dans l'étape d) un laser à impulsion ultracourte est utilisé.

10. Procédé selon la revendication 8 ou 9,
**caractérisé en ce que**
dans l'étape b) une couche d'électrode (30) plate est d'abord appliquée sur le substrat (20), puis la couche d'électrode (30) est structurée.

11. Procédé selon la revendication 10,
**caractérisé en ce que**
la structuration de la couche d'électrode (30) est réalisée au moyen d'un laser, en particulier au moyen d'un laser à impulsion ultracourte.

12. Procédé selon la revendication 8 ou 9,
**caractérisé en ce que**
dans l'étape b) une couche d'électrode (30) structurée est fabriquée par sérigraphie.

13. Procédé selon l'une quelconque des revendications 8 à 12,
**caractérisé en ce que**
dans l'étape c), la couche de recouvrement (40) est appliquée par sérigraphie ou par dépôt thermique en phase vapeur ou selon un procédé ADM (procédé de dépôt par aérosol).

14. Utilisation d'un capteur (10) selon l'une quelconque des revendications 1 à 7 pour la détection des particules électroconductrices et/ou polarisables, en particulier pour la détection des particules de suie.
